**Europäisches Patentamt**

**European Patent Office**

**Office européen des brevets**

(19)

(11) Publication number : **0 354 437 B1**

## (12) EUROPEAN PATENT SPECIFICATION

(45) Date of publication of patent specification :
07.10.92 Bulletin 92/41

(51) Int. Cl.⁵ : **B60H 1/00,** G05G 1/28

(21) Application number : **89114097.2**

(22) Date of filing : **31.07.89**

(54) **A control panel for a vehicle air-conditioning system.**

(30) Priority : **05.08.88 IT 5335188 U**

(43) Date of publication of application :
**14.02.90 Bulletin 90/07**

(45) Publication of the grant of the patent :
**07.10.92 Bulletin 92/41**

(84) Designated Contracting States :
**DE ES FR GB SE**

(56) References cited :
**FR-A- 2 299 676
JP-A-59 109 415
US-A- 2 613 630
US-A- 3 755 662**

(73) Proprietor : **BORLETTI CLIMATIZZAZIONE
S.r.l.
Frazione Masio, 24
I-10046 Poirino (Torino) (IT)**

(72) Inventor : **Monasterolo, Teobaldo
Via degli Alteni, 12
I-10046 Poirino Torino (IT)**

(74) Representative : **Buzzi, Franco et al
c/o Jacobacci-Casetta & Perani S.p.A. Via
Alfieri, 17
I-10121 Torino (IT)**

EP 0 354 437 B1

## Description

The present invention relates to a vehicle control panel, particularly for controlling the air-conditioning system of a vehicle.

More specifically, the invention relates to a control panel according to the pre-characterizing portion of claim 1, which is known from FR-A-2 299 676. This document shows several devices for highlighting the different operating positions of a control member. In one embodiment, the device comprises a fixed screen, a light source for illuminating the screen and a filter interposed between the light source and the screen. The filter is carried by a control lever so that the position of the lever is displayed by a portion of the fixed screen with a different colour from the remaining part of the screen.

The main disadvantage of the solutions known from FR-A-2 299 676 is that a great distance exists between the filter and the screen and also between the filter and the light source. This causes a poor resolution of the coloured light rays emerging from the filter. Moreover, the various portions of the screen receive the light rays emitted by the light source under different angles; consequently, the various portions of the screen receive different amount of luminescent energy and some signs or symbols result less bright than others.

The object of the present invention is to provide a control panel of the type specified above which overcome the above-mentioned disadvantages.

According to the invention, this object is achieved by a control panel having the features recited in the characterising portion of claim 1. Further characteristics and advantages of a control panel according to the invention will become clear from the detailed description which follows with reference to the appended drawings in which:

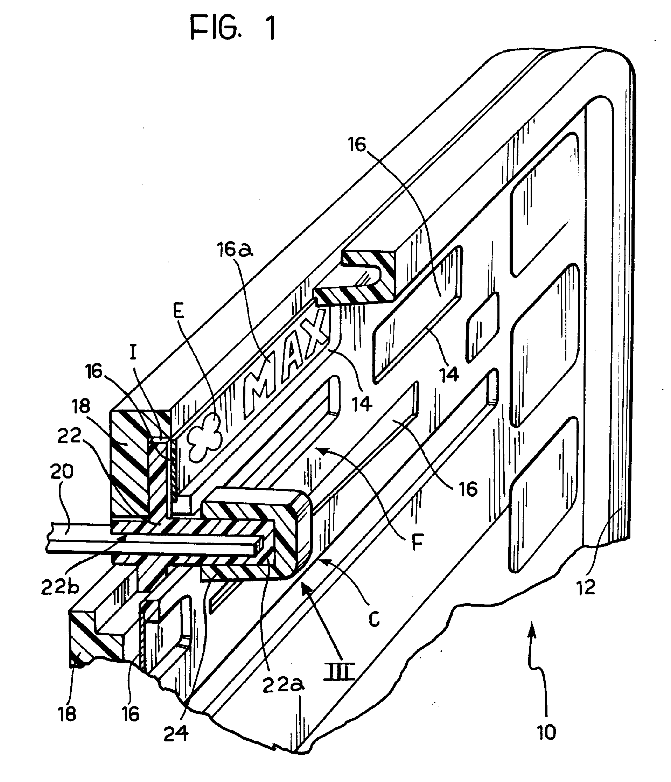

Figure 1 is a partially-sectioned perspective view of a control panel according to the invention,

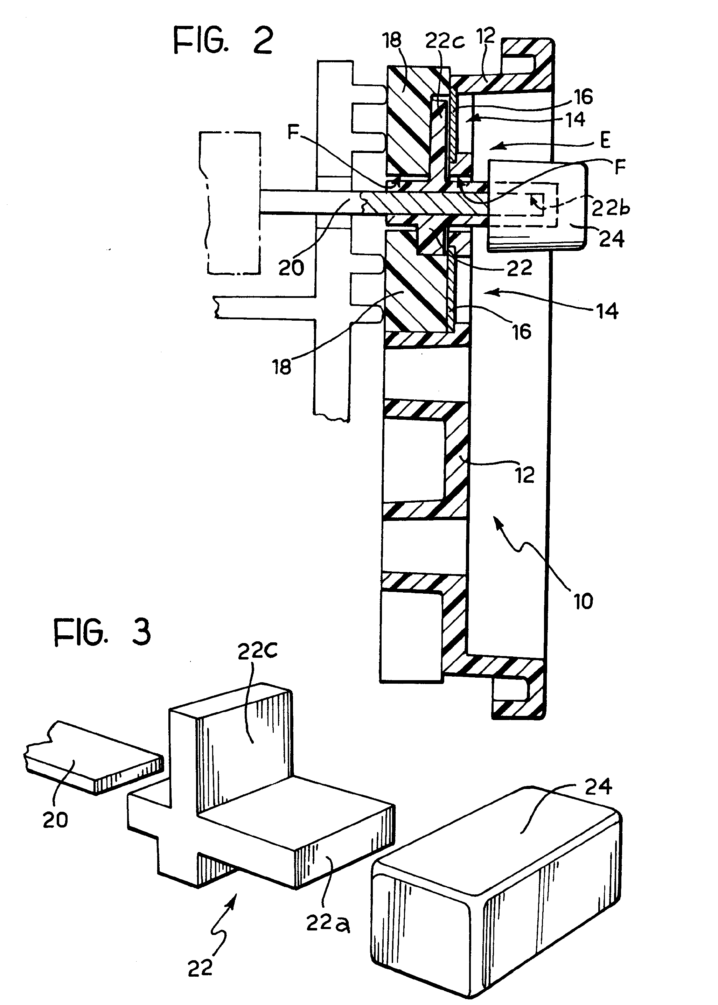

Figure 2 is a cross-section of the panel of Figure 1, and

Figure 3 is an exploded perspective view of a detail of Figure 1.

With reference to the drawings, a panel for controlling the air-conditioning system of a vehicle is generally indicated 10 and comprises a body 12 of plastics material with apertures 14 in which are fitted screens 16 with light-permeable regions 16a, which may be coloured, for defining signs or symbols. The screens 16 may form part of a single mask of plastics material connected to the body 12.

A flat transparent element 18 is mounted behind the body 12 of the panel 10 and is optically connected to a light source so as to make the regions 16a of the screens 16 visible, in known manner.

A slot F is formed in the body 12 of the panel and in the transparent element 18 for the sliding of a control slider C. The latter includes a shaft 20 which is connected to actuator means and on which is fitted a shaped body 22 of coloured transparent plastics material which has a front end 22a on which an operating knob 24 of opaque plastics material is, in turn, fitted. The shaped body 22 has a blind hole 22b for the insertion of the shaft 20 and a portion 22c which projects laterally (substantially perpendicular to the shaft 20) and is slidable in a space I defined between the transparent element 18 and one of the screens 16.

When the panel is operating in the dark, the region of the screen 14 which is indicated E has a different colour from the adjacent regions 16a because the projecting portion 22c of the body 22 faces the region E enabling the position of the slider C to be seen clearly by the user.

The same innovative solution as described above may be applied to panels provided with rotary control knobs. In this case, the knobs each have a radial appendage of coloured transparent material which can slide in the space between the transparent element and the screen.

## Claims

1. A control panel for vehicles, particularly for controlling the air conditioning system of the vehicle, comprising:

   – a control slider (C) projecting from a slot in the panel,

   – a screen (16) provided with light permeable regions for defining symbols or signs (E) on the panel, and

   – a portion of coloured transparent material (22c) connected to the control slider (C) and facing the screen (16) in order to display the signs or symbols (E) indicated by means of a variation in its colour, characterised in that the panel comprises a flat transparent light transmitting material (18) facing the screen and defining, along with the screen (16), an hollow space (I) and in that said portion of coloured transparent material is formed by a laterally projecting flange-like portion (22c) which can slide in said hollow space, the thickness of the hollow space (I) being substantially equal to the thickness of the flange-like portion (22c) of coloured transparent material.

2. A control panel according to Claim 1, characterised in that the slider (C) has an operating end constituted by a body of coloured transparent material (22) connected to a shaft (20) which is connected to actuator means, a knob (24) of opaque material being fitted onto the front end of the body (22a).

**Patentansprüche**

1. Bedienungstafel für Fahrzeuge, insbesondere zum Bedienen der Klimaanlage des Fahrzeuges, umfassend

   – einen Bedienschieber (C), welcher aus einem Schlitz in der Tafel herausragt,

   – einen Schirm (16), welcher mit lichtdurchlässigen Bereichen (E) zum Darstellen von Symbolen oder Zeichen auf der Tafel versehen ist, und

   – einen mit dem Bedienschieber (C) verbundenen Abschnitt (22c) aus farbigem, transparentem Material, welches dem Schirm (16) gegenüberliegt und die anzuzeigenden Zeichen oder Symbole (E) durch eine Veränderung ihrer Farbe darstellt, dadurch **gekennzeichnet,** daß die Bedienungstafel ein flaches, transparentes, lichtübertragendes Materialteil (18) umfaßt, welches dem Schirm gegenüberliegt und zusammen mit dem Schirm (16) einen Hohlraum (I) bildet, und daß der Abschnitt aus farbigem transparentem Material durch einen seitlich abstehenden, flanschartigen Abschnitt (22c) gebildet ist, welcher in diesem Hohlraum verschiebbar ist, wobei die Weite des Hohlraumes (I) im wesentlichen gleich der Dicke des flanschartigen Abschnittes (22c) aus farbigem transparentem Material ist.

2. Bedienungstafel nach Anspruch 1, dadurch **gekennzeichnet,** daß der Schieber (C) ein Betätigungsende hat, welches durch einen Körper aus farbigem transparentem Material (22) gebildet ist, welcher mit einem Schaft (20) verbunden ist, der mit Betätigungsmitteln gekuppelt ist, wobei ein Knopf (24) aus lichtundurchlässigem Material auf das Vorderende des Körpers (22a) aufgesetzt ist.

**Revendications**

1. Panneau de commande pour véhicules, en particulier pour commander le système de climatisation du véhicule, comportant:

   – un coulisseau de commande (C) qui dépasse d'une fente prévue dans le panneau,

   – un écran (16) présentant des régions translucides pour définir sur le panneau des symboles ou des signes (E), et

   – une portion de matériau transparent coloré (22c) connectée au coulisseau de commande (C) et faisant face à l'écran (16) pour faire apparaitre les signes ou les symboles (E) indiqués au moyen d'une variation de leur couleur,

   panneau caractérisé par le fait qu'il comporte un matériau plat transparent (18) qui transmet la lumière, qui fait face à l'écran et qui définit, avec l'écran (16), un espace creux (I) et par le fait que ladite portion du matériau transparent coloré est formée par une portion (22c), en forme de rebord venant latéralement en saillie, qui peut coulisser dans ledit espace creux, l'épaisseur de l'espace creux (I) étant sensiblement égale à l'épaisseur de la portion en forme de rebord (22c) du matériau transparent coloré.

2. Panneau de commande selon la revendication 1, caractérisé par le fait que le coulisseau (C) présente une extrémité de manoeuvre constituée par une pièce de matériau transparent coloré (22) connectée à un axe (20) lui-même connecté à un moyen formant actionneur, un bouton (24) de matériau opaque étant monté sur l'extrémité avant de la pièce (22a).

EP 0 354 437 B1

FIG. 1

4

# FIG. 2

# FIG. 3